(19) **Europäisches Patentamt**

**European Patent Office**

**Office européen des brevets**

(11) **EP 0 920 204 B1**

(12) **EUROPEAN PATENT SPECIFICATION**

(45) Date of publication and mention
of the grant of the patent:
**15.02.2006 Bulletin 2006/07**

(51) Int Cl.:
*H04N 7/00* (2006.01)    *H04N 7/50* (2006.01)
*H04N 7/26* (2006.01)    *H04N 7/28* (2006.01)

(21) Application number: **97830618.1**

(22) Date of filing: **24.11.1997**

(54) **MPEG-2 decoder with reduced RAM requisite by recompression using adaptive tree search vector quantization**

MPEG-2 Dekodierung mit reduziertem Speicherbedarf durch Rekomprimierung mit adaptiver baumstrukturierter Vektorquantisierung

Décodage MPEG-2 avec réduction de mémoire RAM par recompression en utilisant codage adaptif vectoriel à structure arborescente

(84) Designated Contracting States:
**DE FR GB IT**

(43) Date of publication of application:
**02.06.1999 Bulletin 1999/22**

(73) Proprietor: **STMicroelectronics S.r.l.**
**20041 Agrate Brianza (Milano) (IT)**

(72) Inventors:
 • **Pau, Danilo**
 **20099 Sesto San Giovanni (IT)**
 • **Bruni, Roberta**
 **20038 Seregno (IT)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 314 018      EP-A- 0 687 111**
**US-A- 4 727 354      US-A- 4 811 112**
**US-A- 5 649 030**

 • SITARAM V S ET AL: "EFFICIENT CODEBOOKS FOR VECTOR QUANTIZATION IMAGE COMPRESSION WITH AN ADAPTIVE TREE SEARCH ALGORITHM" IEEE TRANSACTIONS ON COMMUNICATIONS, vol. 42, no. 11, 1 November 1994, pages 3027-3033, XP000475157
 • CHUNG-WEI KU ET AL: "TREE-STRUCTURE ARCHITECTURE AND VLSI IMPLEMENTATION FOR VECTOR QUANTIZATION ALGORITHMS" INTERNATIONAL SYMPOSIUM ON CIRCUITS AND SYSTEMS. (ISCAS) VLSI, LONDON, MAY 30 - JUNE 2, 1994, vol. VOL. 4, 30 May 1994, INSTITUTE OF ELECTRICAL AND ELECTRONICS ENGINEERS, pages 139-142, XP000493160
 • NEUHOFF D L ET AL: "ON THE PERFORMANCE OF TREE-STRUCTURED VECTOR QUANTIZATION" PROCEEDINGS OF THE INTERNATIONAL SYMPOSIUM ON INFORMATION THEORY, BUDAPEST, JUNE 24 - 28, 1991, no. -, 24 June 1991, INSTITUTE OF ELECTRICAL AND ELECTRONICS ENGINEERS, page 247 XP000366444
 • LYONS D F ET AL: "REDUCED STORAGE TREE-STRUCTURED VECTOR QUANTIZATION" IMAGE AND MULTIDIMENSIONAL SIGNAL PROCESSING, MINNEAPOLIS, APR. 27 - 30, 1993, vol. VOL. 5, no. -, 27 April 1993, INSTITUTE OF ELECTRICAL AND ELECTRONICS ENGINEERS, pages 602-605, XP000437741

## Description

The present invention relates to video data processing where it is necessary to store data in dedicated video memories in order to implement real time processing on digital data, like for example in video decoders based on the use of the MPEG compression algorithm or in SQTV systems (often referred to with the alternative acronym IQTV), and in particular to a method and architecture that allow for a reduced requisite of video memory capacity.

Because of the particular importance and widespread use of the of the MPEG standard, the ensuing description will continue to refer to such a prominent application by referring to MPEG coder/decoder systems, without necessarily intending to limit the invention to this field of application, because the same principles and architecture of the invention may also be utilized in other applications requiring a for reducing the memory requisite, as in the case of the so-called SQTV (Smart Quality TeleVision) processors where it is necessary to store entire pictures, or part of them, during the decoding phase in order to implement adequate algorithms to correct or filter out disturbances and/or to implement high refresh rates, not linked to the AC power line frequency.

Therefore, the invention is useful for digital decoders and coders of pictures, as well as in other applications such as graphic cards, video image processors and more in particular where there is a need for a temporary storage of a digitized picture of any format to be eventually viewed on at least part of a display screen.

The possibility of reducing the memory requisites becomes even more important in those systems destined to support the decoding of the high definition TeleVision standard.

For example, an MPEG2 video decoder integrated system capable to decode high definition sequences as well as standard definition sequences, normally requires access to an external video memory (DRAM) of at least 80Mbits, through a common interface.

Typically, in such an application the video memory may be configured as follows:

♦ a **bit buffer**: that is a buffer for compressed data that the MPEG2 standard fixes at 9,500,000 bits;

♦ an **I-frame buffer** for the *I-picture* (Intra-picture) decompressed in a 4:2:0 format;

♦ a **P-frame buffer** for the decompressed *P-picture* (Predicted-picture), in a 4:2:0 format;

♦ a **B-frame buffer** for the decompressed *B-picture* (Bidirectionally Predicted Picture), in a 4:2:0 format.

Each frame buffer in the 4:2:0 format may occupy an amount of memory given by:

| | |
|---|---|
| 1920 x 1080 x 8 for the luma Y = | 16,588,800 bit |
| 960 x 540 x 8 for the chroma U = | 4,147,200 bit |
| 960 x 540 x 8 for the chroma V = | 4,147,200 bit |
| total Y + U + V = | 24,883,200 bit |

Therefore the actual total amount of memory requisite, for high definition TeleVision decoding will be:

$$9,500,000 + 24,883,200 + 24,883,200 + 24,883,200 = 84,149,600 \text{ bits}$$

An optimization, made possible by using fast synchronous memories such as SDRAM, consist in carrying out the decompression of the B-pictures straightaway upon reception without storing them. This optimization reduces the external memory requisite to:

$$9,500,000 + 24,883,200 + 24,883,200 = 59,266,400 \text{ bits}$$

in view of the fact that the B-buffer is realized on chip, being necessary to convert the scanning of each 8x8 block, defined in the MPEG-2 compressed bitstream, in that of each row of the picture (field or frame) as required by the video display processing of the picture itself. Such a conversion macrocell is commonly referred to as "MACROBLOCK TO RASTER SCAN CONVERTER"

The preceding Europe patent application No. 97830041.6, of February 6, 1997, published as EP 0 858 206 on August 12, 1998, in the name of the same applicant, discloses an efficient tree-search vector quantization (TSVQ) for compressing digital video data to be stored in the external memory, thus reducing the video memory requisite of the system. In practice, the memory required by the decoding system can be remarkably reduced by recompressing the pictures used as a reference for the prediction (the I-picture and the P-picture and eventually also the B-picture), after MPEG decompression and before storing them in the external video memory. A similar method has been published earlier in EP 0 687 111 without using TSVQ. The same TSVQ compression technique is also useful in SQTV processors, as well described in said precedent patent application.

As already described in said precedent patent application, the effectiveness of the compression method based on the TSVQ vector quantization, is strongly influenced by the way the quantizer for quantizing the differences among the adjacent pel vectors is chosen.

The present invention improves the effectiveness of the method described in said precedent patent application by providing a more efficient way of selection of the quantizer, apart from other improving features.

With the aim of highlighting the object of the present invention in relation to the system disclosed in said precedent European patent application No. 97830041.6, of February 6, 1997, it is considered necessary or useful to refer, by way of illustrative example, to the description of an MPEG2 decoding system employing a tree-search vector quantization for compressing digital video data to be stored in an external video memory.

Let I be a digital picture represented by a matrix of M rows and N columns of pixels, and let I(y,x) the pixel of the row y and of the column x, coded with an integer number B of bits (binary digits).

Let the I picture be decomposed in rectangular blocks having an RxC size (R rows and C columns). The maximum efficiency for the compression is obtained if R and C are chosen amongst the integer divisors of M and N, respectively.

The algorithm performs a compression of each block, that is, a reduction of the number of bits necessary for representing the block itself, by exploiting only the data extracted from the block itself, this in order of simplifying both the access to the block in the stream of compressed data and also the decompression of the block itself.

The TSVQ compression mechanism exploits the correlation existing amongst adjacent pixels of a picture for reducing the number of bits necessary for a binary description of the picture itself. Let us consider such a vector formed by J rows and K columns: once again the utmost effectiveness of the compression is obtained if J and K are chosen among the integer dividers of R and C, respectively.

In fact, it is possible to approximate the value of a pixel vector by appropriately combining only the values of the pixels adjacent to it and forming a second pixel vector, thus making what is commonly referred to as a vector "prediction".

It is therefore possible to reduce the amount of binary digits necessary for a digital representation of a picture by defining the prediction mechanism and by appropriately coding, rather than each pixel, only a prediction error vector. The more precise is the vector prediction (and thus of each of its components), the lower is the entropy of the prediction error, that is, the lower is the number of bits necessary for coding it.

Let us define a scanning arrangement of the RxC block, such that for each JxK vector, with the exception of the first one (which is not subject to any modification the values of its components), there exists another, preceding it, that may be used as the predictor of the vector itself. Let

$$V\ (i\ ...\ i + J - 1,\ j\ ...\ j + K - 1),\ i = 1,\ ...,\ [R - J + 1]\ \text{and}\ j = 1,\ ...,\ [C - K + 1]$$

the vector composed of the pixels contained in the rectangular area determined by the following coordinates:

- ♦ top left coordinates (i, j)

- ♦ top right coordinates (i, j + K - 1)

- ♦ bottom left coordinates (i + J -1, j)

- ♦ bottom right coordinates (i + J - 1, j + K - 1)

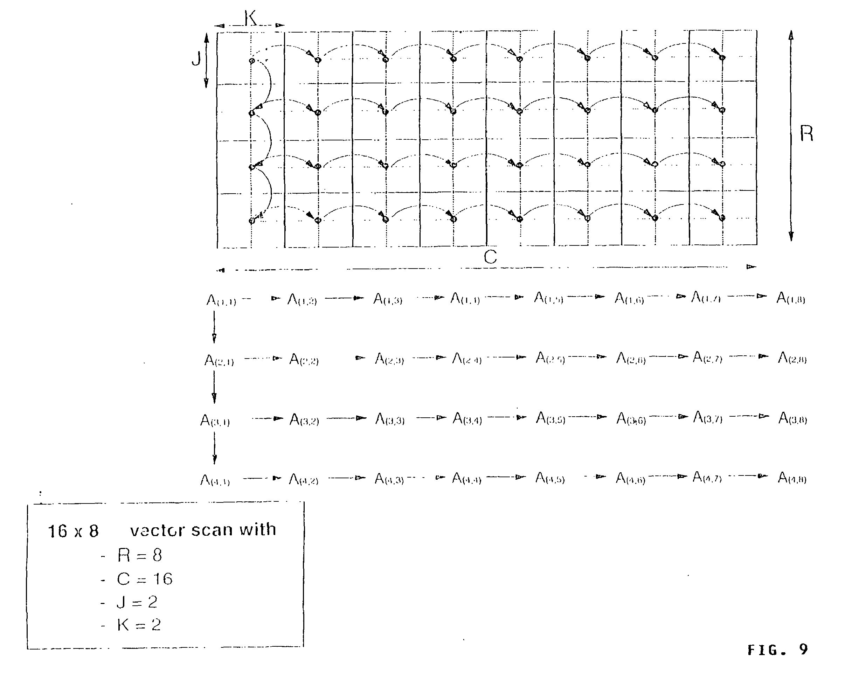

the arrangement of Fig. 9, the arrangement is defined as follows:

$$OV \ (1 \ldots J, \ 1 \ldots K) \qquad \text{first scan vector}$$

$$OV' \ (i \ldots i + J - 1, \ 1 \ldots j + K - 1) \qquad i = 1 \ \text{and} \ j = 1, \ 1 + K, \ 2 + K, \ C - K + 1$$

Let us define E = V - V', the prediction error

Let us divide such a scanning in regions so that each vector E belongs to one and only one of them. The union of said regions constitutes the RxC block.

Let us define a local complexity measure for each region as the average value of the sum (for example) of the components of each vector E( ) in terms of absolute value and for j ranging between 1 and (C - K + 1) / D, with D being a positive integer ranging between 1 and (C - K - 1).

Alternatively, other measures could be used, for example the maximum value of said components.

Such positive value is quantized with one of the G values stored in a table and representing the centroids of the areas in which the most general scalar statistic of said values has been divided in and that such a partition minimizes the mean square error as compared to any other possible partition of the same statistic.

This quantization table G is generated by using the "Generalized Lloyd's Algorithm", well know in literature.

Let us divide each component of the error prediction vector by such a quantized value G*. In this manner the entropy of the prediction error statistic is further reduced toward a mean value equal to 0.

This step of the algorithm increases the efficiency of the next quantization step, while reducing the quantization error of said error vector E, scaled by said gain G*, and thereafter named E*.

For example if D = 2, the region RxC is subdivided in two zones; in the first zone of which the value G1 is calculated. Said value is substituted (i.e. quantized) with G1* and used to scale the E vectors, which are calculated in said first zone. The same procedure is used for the second zone, leading to a different value of G2.

Once the region where E* has been calculated is defined, said error vector is quantized, that is, replaced with one of the H vectors stored in a table and representing the centroids of the areas in which the most general vector statistic of a picture has been partitioned, and such that this partition minimizes the mean square error as compared to any other possible partition of the same statistic.

The quantization table H is generated through the well known Generalized Lloyd's Algorithm.

The advantage of using a TSVQ compression technique derives from the fact that the quantization process terminates after a number of comparisons equal to the logarithm in base 2 of H.

The TSVQ compression method may be applied to each block in which the picture is decomposed through the following operations:

1) coding of the unmodified first vector V (1 .. J, 1 ... K) of an RxC block by vectors of TXK dimensions;

2) selection and use of a scanning path of the RxC block by vectors of JxK dimension;

3) selection of a partition in regions of said scan;

4) selection and calculation of a measure of complexity for each region.;

5) quantization of said measure through binary search and coding of the quantizer;

6) generation of a predictor vector of the current one to be quantized;

7) division of said prediction error by the quantized complexity measure;

8) quantization of the result of the division through binary search and coding of the quantizer.

9) repetition of the steps 4 to 8, using the path defined in step 2 for all the vectors of the block RxC and for all the regions in which said block has been partitioned.

1) CODING OF THE UNMODIFIED FIRST VECTOR V (1 ... J, 1 ... K) OF AN RxC BLOCK

Let the RxC block be composed as follows:

$$A(1, 1) \quad A(1, 2) \quad A(1, 3) \quad A(1, 4) \quad A(1, 5) \quad A(1, 6) \quad A(1, 7) \qquad A(1, C/K)$$
$$A(2, 1) \quad A(2, 2) \quad A(2, 3) \quad A(2, 4) \quad A(2, 5) \quad A(2, 6) \quad A(2, 7) \qquad A(2, C/K)$$
$$A(3, 1) \quad A(3, 2) \quad A(3, 3) \quad A(3, 4) \quad A(3, 5) \quad A(3, 6) \quad A(3, 7) \qquad A(3, C/K)$$

........ ........................

...... ...... ........ ...........

.. ...... .....................

$$A(R/J, 1) \quad A(R/J, 2) \quad A(R/J, 4) \quad A(R/J, 4) \quad A(R/J, 5) \quad A(R/J, 6) \quad A(R/J, 7) \qquad A(R/J, C/K)$$

where A is the vector composed of JxK pixels. The first vector A(1, 1) is coded without any modification, according to its original resolution by B bits.

2) SELECTION AND USE OF A SCANNING PATH OF THE RXC BLOCK BY JXK DIMENSION VECTORS

The scan selected for generating the prediction error and the relative vector quantization may be as follows:

- first row, $\quad A(1, 1), \ A(1, 2) \qquad A(1, C/K)$
- second row, $\quad A(2, 1), \ A(2, 2) \qquad A(2, C/K)$
- third row, $\quad A(3, 1), \ A(3, 2) \qquad A(3, C/K)$

.................... ...... .

...........................

last row, $\quad A(R/J, 1), \ A(R/J, 2) \qquad A(R/J, C/K)$

3) SELECTION OF A PARTITION IN REGIONS OF SAID SCANNING

The scanning previously selected is further partitioned in regions that comprise a part of the prediction errors of the RxC region. Typically, symmetric partitions are preferred. The number of such partitions is comprised between 1 and (C - K + 1).
For example, if D = 2, two partitions are obtained:

FIRST REGION                                          SECOND REGION

$A(1, 1) \quad A(1, 2) \quad A(1, 3) \quad A(1, 4) \quad A(1, C/2 * K) \quad // \quad A(1, (C/2 * K) + 1) \quad A(1, C/K)$

$A(2, 1) \quad A(2, 2) \quad A(2, 3) \quad A(2, 4) \quad A(2, C/2 * K) \quad // \quad A(2, (C/2 * K) + 1) \quad A(2, C/K)$

$A(3, 1) \quad A(3, 2) \quad A(3, 3) \quad A(3, 4) \quad A(3, C/2 * K) \quad // \quad A(3, (C/2 * K) + 1) \quad A(3, C/K)$

.....................................

.. .. .. ................. ..............

............... ........................

$A(R/J, 1) \quad A(R/J, 2) \quad A(R/J, 3) \quad A(R/J, C/2 * K) \quad // \quad A(R/J, (C/2 * K) + 1) \quad A(R/J, C/K)$

Other partitions are obviously possible.

## 4) SELECTION AND CALCULATION OF A MEASURE OF COMPLEXITY FOR EACH REGION

The complexity measure may be defined as the average value of the sum of the absolute values of the components of each predictor error vector. These errors belong to the same region in which the measure of complexity is calculated. Alternative measures are possible such as for example the average value of the maximum values of the components of each prediction error vector.

## 5) QUANTIZATION OF SAID MEASURE THROUGH A BINARY SEARCH AND CODING OF THE QUANTIZER

Let us consider the use of a quantization table constituted by an integer number G of scalar values. This table belongs to a set so that it is possible to select it in a different manner for region and region. Each of these numbers G represents the centroid of a well defined partition of the statistic of the measures of complexity, calculated by the Generalized Lloyd's Algorithm. Let us assume to dispose them at the nodes of a binary tree, and that G = 7.

G4         "00"

G2

G5         "01"

G1

G6         "10"

G3

G7         "11"

The complexity measure calculated in step 4 is quantized in terms of G4 G5 G6 G7. For example let us assume G to be the value of said measure. Let us calculate the difference (G - G2) and (G - G3) and that the first is less than the second. Hence, the next step is to calculate (G - G4) and (G - G5). Let us suppose that the second is less than the first. Therefore $G^* = G5$ is the value that better approximates G, among those available in said table For the coding of $G^*$, only two bits are necessary: "01", in the considered example.

It can be noticed that the difference (G - Gi) may be calculated according to the L 1 or L2 norms or in a different way.

## 6) GENERATING A PREDICTION VECTOR FOR THE CURRENT ONE. TO BE QUANTIZED

The prediction is of the spatial type, by that intending the generation of the components of the prediction error vector as sum and/or difference, weighed by appropriate coefficients or not, of the pixels belonging to adjacent vectors. An example is illustrated hereinafter.

For the prediction use is made of the vector in the position that precedes the predicted one. For example, to predict A(1, 2) the predictor used is A(1, 1).

For instance, let A(1, 1) and A(1, 2) be two vectors with J = 4 and K = 1:

$$A(1, 1) \quad = \quad P0$$
$$P1$$
$$P2$$
$$P3$$

$$A(1, 2) \quad = \quad Q0$$
$$Q1$$
$$Q2$$
$$Q3$$

The prediction vector is equal to

$$E(\ ) = \quad Q0 - P0$$
$$Q1 - P1$$
$$Q2 - P2$$
$$Q3 - P3$$

For each pixel Q of the block, the predictor to be adopted will be the pixel P in accordance with what previously defined. It should be noticed that such a predictor, following the previously illustrated scan order, has already been quantized and reconstructed, and therefore it is not taken from the original picture. This allows for a better control of image quality, according to known ADPCM techniques.

7) DIVIDING SAID PREDICTION ERROR BY THE QUANTIZED MEASURE OF COMPLEXITY

Said predictor error E( ) belongs to the region wherein said measure G was calculated. Therefore, each component of E( ) is divided by the quantized measure G*. Thus obtaining E*( ).

8) QUANTIZING THROUGH BINARY RESEARCH AND CODING OF THE QUANTIZER

Let us consider the use of a quantization table composed of H vectors, each of which is made of 4 integer components.

Let us suppose that each of these vectors represent the centroid of a well defined partition of the prediction vector statistic and calculated through the Generalized Lloyd's Algorithm and that they are disposed at the nodes of a binary tree and let H be equal to 15, then

| | | H8 | "000" |
| | H4 | | |
| | | H9 | "001" |
| H2 | | | |
| | | H10 | "010" |
| | H5 | | |
| | | H11 | "011" |
| H1 | | | |
| | | H12 | "100" |
| | H6 | | |
| | | H13 | "101" |
| H3 | | | |
| | | H14 | "110" |
| | H7 | | |
| | | H15 | "111" |

Notation:

- ♦ H2 and H3 are sons of H1

- ♦ H4 and H5 are sons of H2

- ♦ H7 and H6 are sons of H3

- ♦ H8 and H9 are sons of H4

- ♦ H10 and H11 are sons of H5

- ♦ H12 and H13 are sons of H6

- ♦ H14 and H15 are sons of H7

A "son vector" is by definition the vector whose components correspond to the arithmetic mean of the homologous components of the parents vectors

The scaled error predictor $E^*(\ )$ is quantized through H8, H9, H10, H11, H12, H13, H14, H15. For example, let us calculate the difference $[E^*(\ ) - H2]$ and $[E^*(\ ) - H3]$, and let us calculate the distance (for example the Norm 12) equal to the sum of the squares of the differences among the components of the two vectors) between the vector $E^*(\ )$ and H2 and between the vector $E^*(\ )$ and H3.

Let us that the second is less that the first, thence, the next step is the calculation of the distance between $E^*(\ )$ and H6 and between $E^*(\ )$ and H7. Let us suppose that the first is less than the second, then $E^*(\ )$ and H12 and between $E^*(\ )$ and H13 will be calculated: if the latter is less than the first then H13 will be the quantized vector of $E^*(\ )$, which is the best value of approximation, among those available in the above mentioned table. For coding H13 only three bits "101", are necessary for the considered example.

```
                                                        H8
                                        H4
                                                        H9
                        H2
                                                        H10
                                        H5
                                                        H11
                    H1
                    \                                   H12
                     \              H6
                      \           /    \————————>              H13
                       \ H3     /
                                                        H14
                                        H7
                                                        H15
```

Only the vectors H8, H9, H10, H11, H12, H13, H14 o H15 can be the quantized ones of E*( ), while the others are used for determining which of those vectors is more similar to E*( ). Finally, as an alternative to the Norm 12, any other measurement of distance in the vectorial space may be utilized (for example the Norm I1, that is to say the sum of the modules of the differences among the homologous components of the two vectors). It is important to notice that in this case it is sufficient to have only one table for the chrominance and one for the luminance, because the error E*( ) has been scaled with G*.

Fig 1 as already cited shows an MPEG2 video decoder which includes a TSVQ encoder and a TSVQ decoder of compression/decompression by a tree-search vector quantization of data to be stored in the video memory (DRAM).

Fig. 2 shows the means for enabling or disabling the TSVQ recompression of data, depending on the functioning conditions, as already described in the above mentioned previous European patent application.

It has now been found and constitutes the object of the present invention that by implementing a premultiplication of the two basic look up tables, for quantizing the luma and chroma components, respectively, by all the quantized values G* that the complexity measure may assume and that are known in advance, an important simplification of the required hardware is achieved by obviating to the need of scaling the predictor error E( ), as done in the system described in the precedent European patent application as identified above.

In practice, the multiplication of the look-up tables, so to construct two different sets of read only values, one set for the luminance and one set for the chrominance, is very outstandingly simpler than performing a scaling division [E( ) / G*] of the predictor error.

These and other important features of the method and of the system of the invention are defined in the annexed claims

The various aspects and advantages of the invention will be even more evident through the following detailed description of an embodiment and by referring to the attached drawings, wherein:

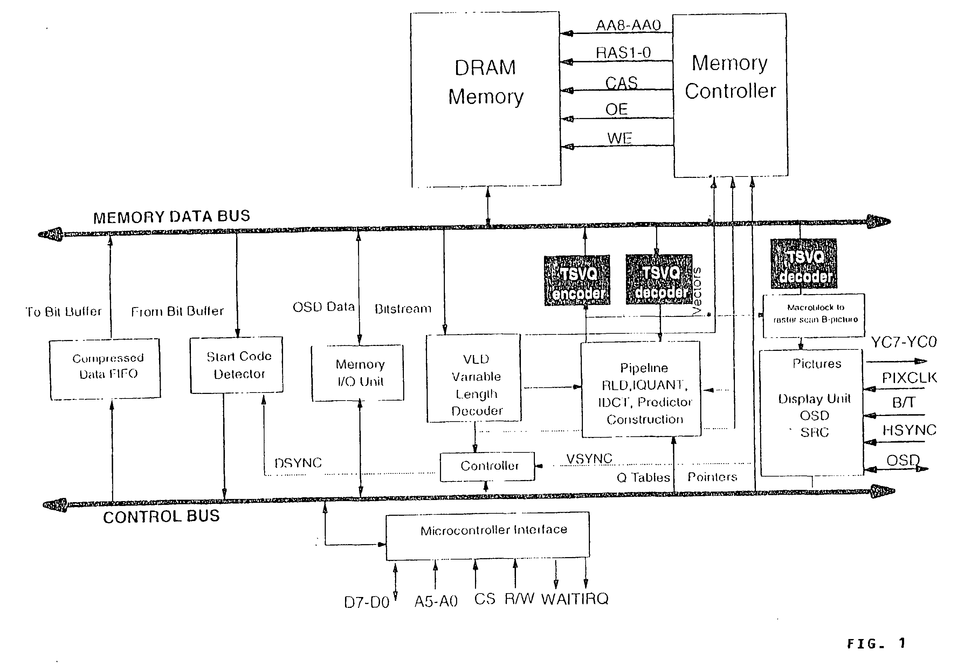

**Figure 1** is a block diagram of an MPEG2 video decoder including a TSVQ encoder and a TSVQ decoder;

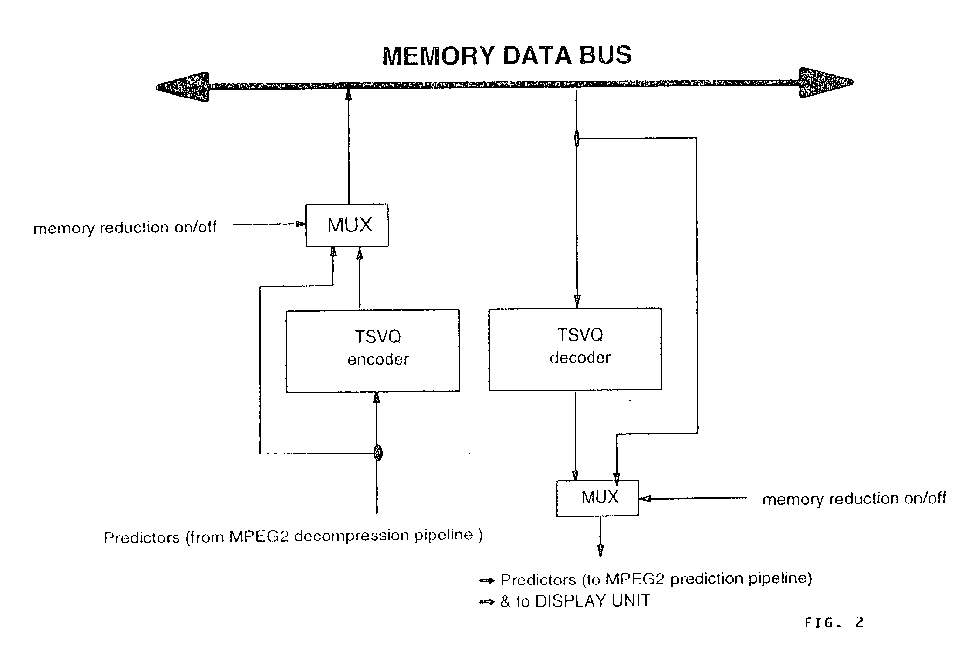

**Figure 2** shows means of enabling/disabling of the TSVQ encoder and of the TSVQ decoder:

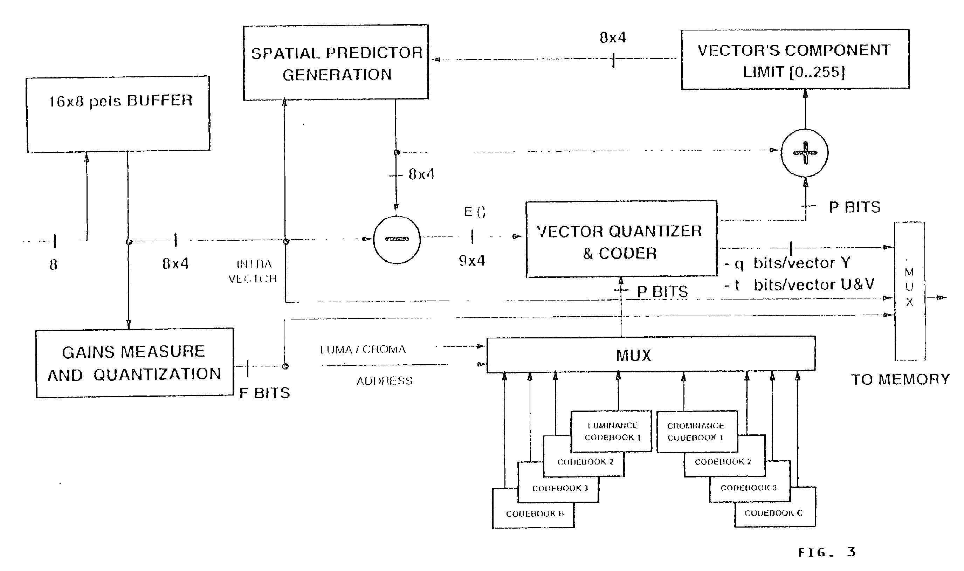

**Figure 3** is a block diagram of the TSVQ encoder that highlights the multiple quantizing tables for luma and chroma, respectively, as well as the quantizer block of the measure of local complexity;

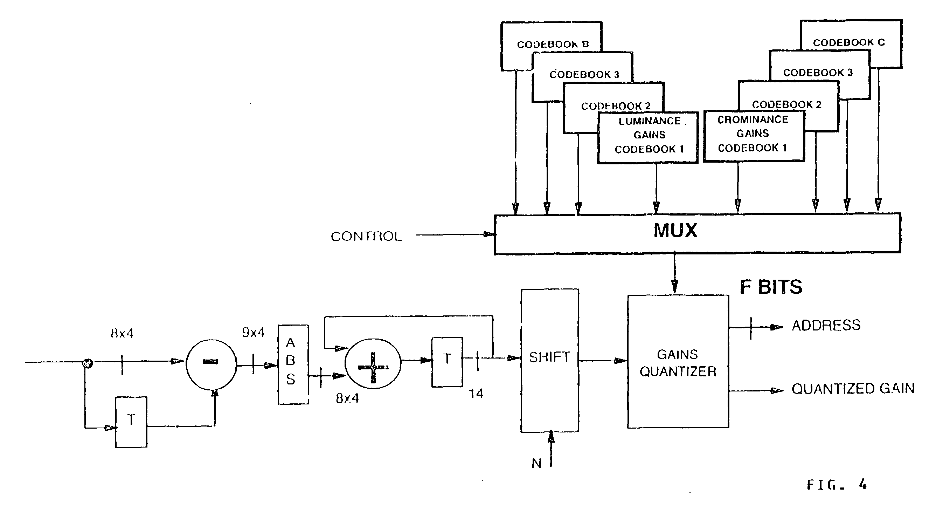

**Figure 4** shows the architecture of the vector estimator and quantizer of the local complexity measure;

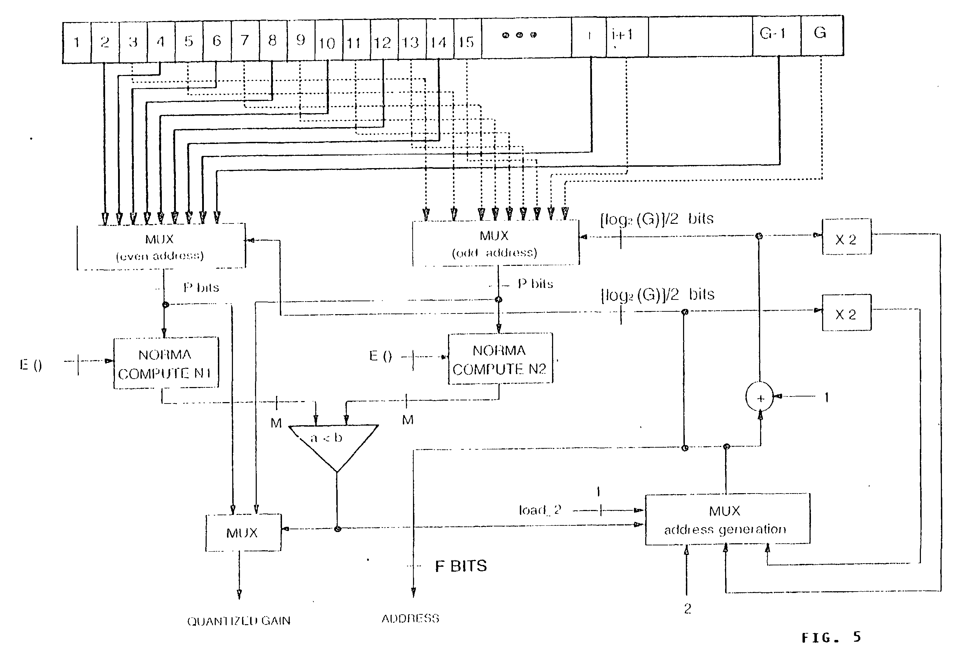

**Figure 5** shows the architecture of the scalar quantizer of the local complexity measure;

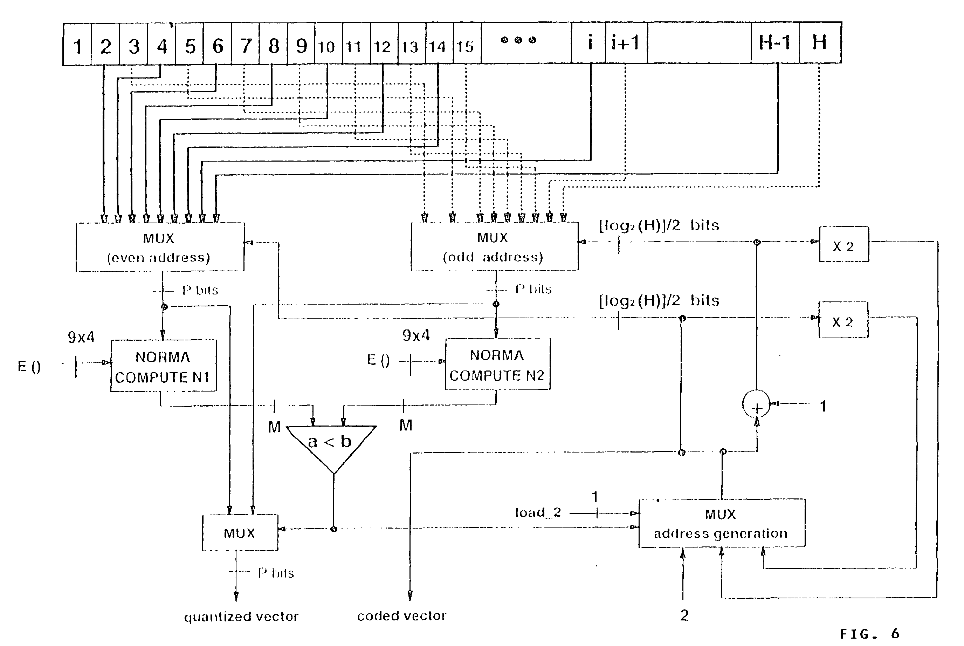

**Figure 6** shows the architecture of the vectorial quantizer of the nonscaled prediction error vector;

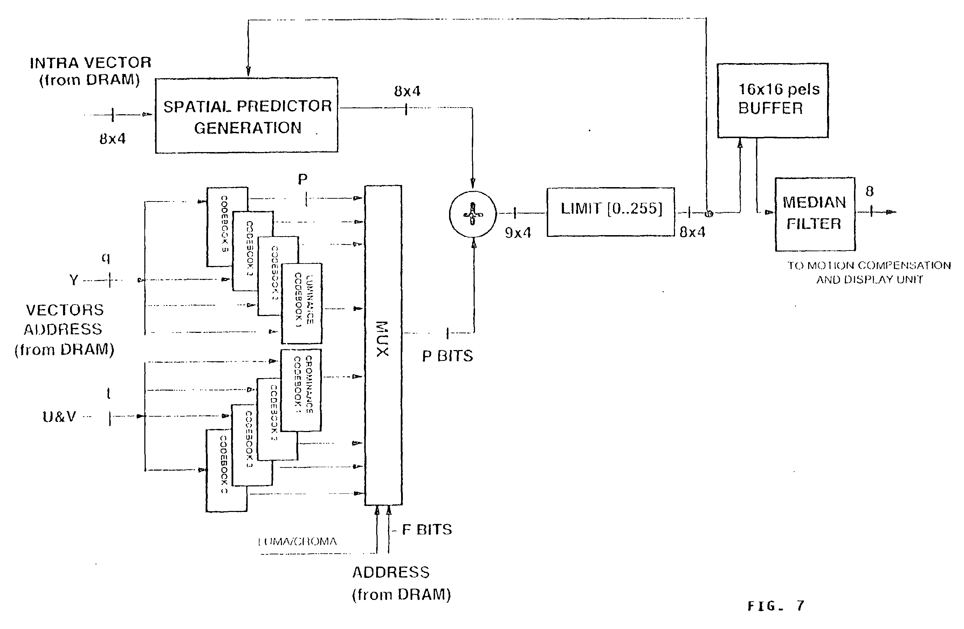

**Figure 7** shows the architecture of the TSVQ decoder of Fig. 2;

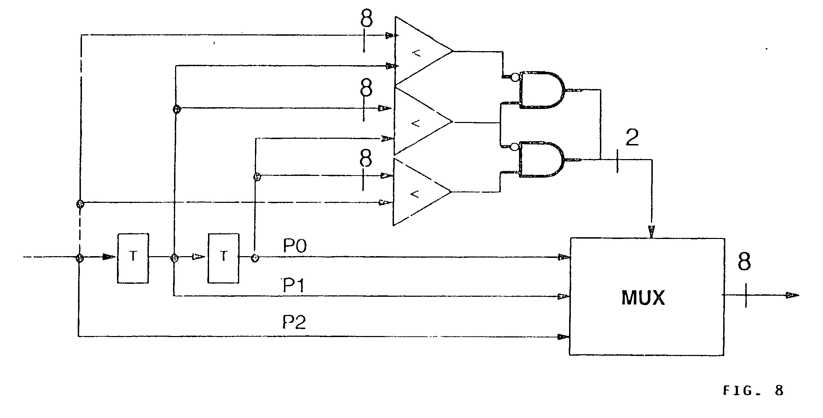

**Figure 8** shows the architecture of the median filter of the scheme of Fig. 7,

**Figure 9** shows an example of the scanning path of an RxC block by JxK vectors;

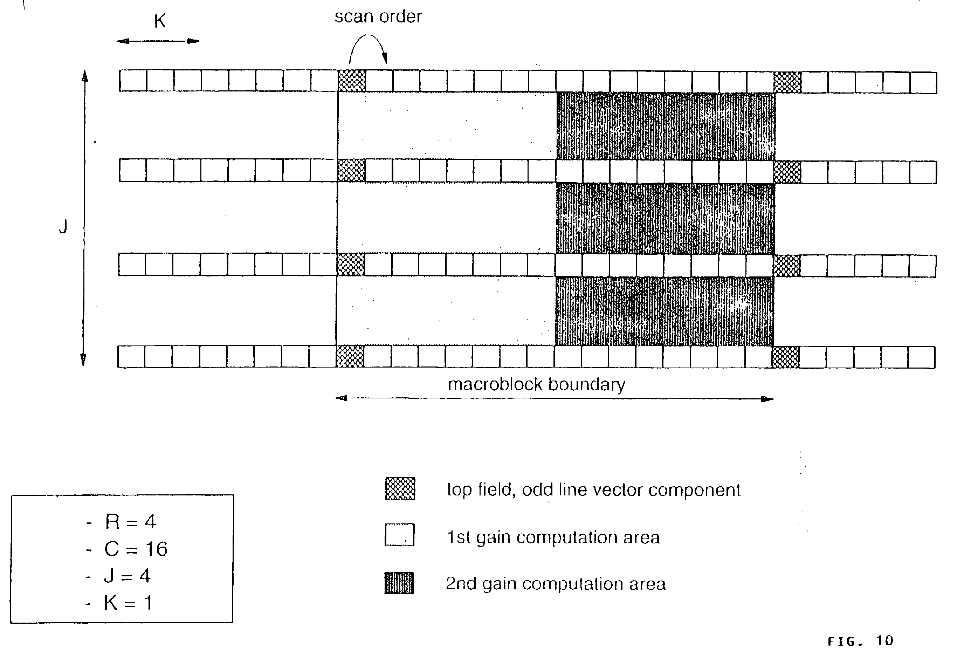

**Figure 10** shows an example of subdivision into regions of the scanning path;

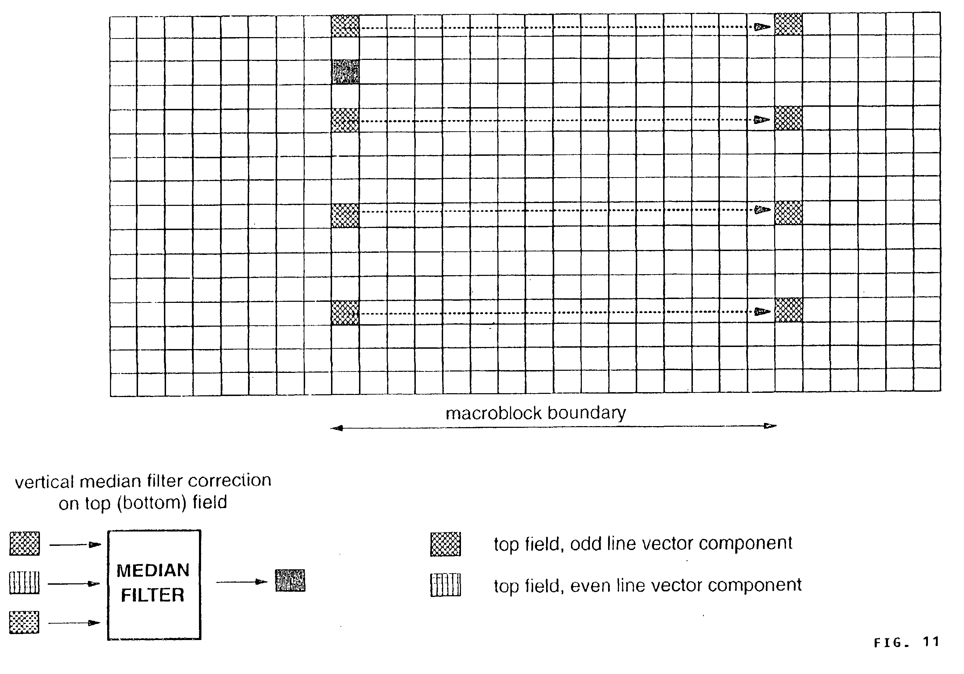

**Figure 11** shows an example of a working window of the median filter downstream of the TSVQ decoding;

Fig. 3 provides a circuit diagram scheme in which, besides a general view of the TSVQ encoder, the prediction and quantizing of the single pixels is detailed.

It should be noted how the multiple quantizer tables (stored in a ROM) are defined for quantizing the prediction error for both the luminance and chrominance. A first multiplexer MUX1 selects which one should, be used depending on whether the luma or chroma is being compressed and depending on the quantized measure of the local complexity of the region considered.

In other words, according to the shown processing the prediction error E( ) is not divided by G* as it is done according to the above cited previous European Patent application and thereafter quantized using single preestablished table. On the contrary, the prediction error E( ) is quantized as such by using one of a plurality of tables, all derived from the theoretical one wherein each value of the table has been premultiplied by G*. By considering for example that the luminance, G* may assume four different values, the available precalculated tables will be four. The G* value will determine the selection of the table to be used among the four and E( ) will be quantized in relation to such a selected table.

Fig. 3 depicts the block called "gain measure and quantization" that receives at an input a portion of the RxC region for which said measure is calculated and thereafter quantized. Thence its output corresponds to a certain address.

Fig. 4 shows an implementation of said block, while Fig. 10 shows an example of partition into two regions of the block RxC for the calculation of respective gains.

Figures 5 and 6 illustrate an embodiment of the quantizer of the gain measure and of the unscaled predictor error vector

The TSVQ decoder is illustrated in Fig. 7. In this figure, the presence of a pixel buffer (already decompressed) may be noted which allows for the construction of the working window of the median filter. This filter receives at an input an odd number of pixels and outputs the one with the mean value.

By considering for example a median filter to which three pixels values 10, 20, 15, respectively, are fed, its output will take the mean value 15. Fig. 8 shows a sample the architecture of such a filter, while Fig. 11 is a sample working window on which the filter operates.

Fig. 2 shows how the TSVQ decoder and the TSVQ encoder may be disabled or enabled through multiplexers which are driven by the internal control bus, which is in turn linked to the microprocessor that supervises the MPEG2 device of the high level diagram of Fig. 1. Indeed, a dynamic management of the external memory (DRAM) takes place, an increase of memory free space being obtained by enabling the TSVQ encoder and the TSVQ decoder.

This may be convenient if the external memory is greater than 32 Mbits, whereby the memory space remaining available may be used for other functions, such as for example graphics and teletext (OSD).

<u>EXAMPLE OF COMPRESSION WITH N BITS PER PIXEL</u>

With reference to the above, let us consider an RxC = 4* 16 block of pixels after an eventual motion compensation. Let us suppose of independently compressing each vector of pixels relative to an area JxK = 4x1 of the picture and comprised within said RxC block for the luma (as shown in Fig. 9) and within an RxC = 4*8 block for the chroma.

The total number of bits utilized for the compression of the block is:

$$8 * J * K + (C - 1) * N + F1 \div F2 ..... + FD$$

where:

8 = number of bits used for the coding of each component of the first vector of the scan

J = vertical dimension of the pixel vector

K = horizontal dimension of the pixel vector

N = hits used for coding each vector

C = number of pixel vectors within the RxC block

F1 = bits used for coding the complexity measure within the region 1

F2 = bits used for coding the complexity measure within the region 2

FD = bits used for coding the complexity measure of the D-th region

For the case: J = 4, C = 16, N = 7, K = 1, F1 =5, F2 = 4 and for the luminance we obtain a total of:

$$8 * 4 * 1 + (16 - 1) * 7 + 5 + 4 = 146 \text{ bit} / 4 * 16 \text{ macroblock}$$

For the case: J = 4, K = 1, C = 8, N = 8, F1 = 3, F2 = 2 and for the chrominance we obtain a total of.

$$8 * 4 * 1 + (8 - 1) * 8 + 3 + 2 = 93 \text{ bit} / 4*8 \text{ macroblock.}$$

EXAMPLE OF COMPRESSION OF AN MPEG MACROBLOCK

Each macroblock is made up of four 4*16 blocks of luminance and of two 4*8 blocks of chrominance; each macroblock is coded with a number of bits equal to:

$$(2 * 16 * 8 * 8) + (2 * 8 * 8 * 8) = 3,072 \text{ bit}$$
$$\text{luma} \qquad \qquad \text{chroma}$$

In each 1,920x1,080 frame there are 8,100 macroblocks:

$$3,072 \text{ x } 8,100 = 24,883,200 \text{ bits}$$

By considering a 7bit/vector compression for the luminance and an 8 bit/vector compression for the chrominance, the memory requisite becomes:

$$(2 * 2 * 146) + (93 * 2 * 2) = 956 \text{ bits}$$

$$\text{luma} \qquad \text{chroma}$$

Therefore, each frame occupies:

$$956 \times 8,100 = 7,743,600 \text{ bits}$$

The compression factor per macroblock so obtained is equal to about 3,2.

<u>EXAMPLE OF APPLICATION TO AN MPEG DECODER</u>

By taking into account the above relationships, it is possible to reach the target of 32 Mbits capacity by assuming the compression with the above computed factor for the decompressed I and P pictures. This result is attained by recompressing the I and P pictures after their MPEG decompression and before they are stored in the external memory. They will be then decompressed when they are read from the external memory, as depicted in the functional block diagram of Fig. 1.

The compression is performed on the 4*16 block as output from the I-DCT and motion compensation pipeline, according to an adaptive DPCM scheme. In particular, in the considered example, for the 4* 16 blocks of luminance, subdivided in 4* 1 vectors, a 7bits/vector compression is selected, whereas for the 4*8 blocks of chrominance, subdivided in 4*1 vectors, an 8 bits/vector compression is selected. Thus the memory requisite becomes:

$$9,500,000 \div 7,743,600, + 7,743,600 + 7,743,600 = 32,730,800 \text{ bits}$$

$$\text{B compressed buffer}$$

$$\text{P compressed buffer}$$

$$\text{I compressed buffer}$$

<u>DESCRIPTION OF THE FIGURES PERTAINING TO THE CONSIDERED EMBODIMENT</u>

<u>FIGURE 2</u>

The TSVQ encoder feeds the compressed data stream to a multiplexer, to a second input of which there exists the same input datum of said TSVQ encoder. By a configurable control signal of a microprocessor coupled to the MPEG2 decoder, as shown in Fig. 1, it is possible to condition the multiplexer for selecting one or the other of its two inputs, in order to use or exclude the TSVQ compression. The same arrangement is implemented also in the decoder. The exclusion of the TSVQ encoder also implies that of the TSVQ decoder. Indeed, a dynamic management of the external memory is implemented and therefore an increase or a decrease of the free memory space by enabling or disabling the TSVQ encoder and the TSVQ decoder.

<u>FIGURE 3</u>

This figure shows a circuit which, apart from providing a general view of the encoder, also details the prediction and quantization loop of the single pixel vectors. It should be noted the way the two tables of quantizers, optimized for luma and chroma compression are defined. A multiplexer selects which of the tables should be used, depending on whether the chroma or the luma is being compressed and depending on the local complexity measure.

The input buffer, for example with a memory capacity of 16x8 pixels (each coded with 8 bits) serves for storing the block to be decomposed in vectors, for example, of 4x 1 pixels.

A block referred to as "gain measure and quantization" calculates for the considered region, the multiplexer control datum so to select the most appropriate table. The vector is then sent to a differential stage which determines the difference between the source and prediction vector. The resulting prediction error vector is then quantized by the block of Fig. 6. The ROM address, see Fig 6, that contains the quantized vector is then sent to the DRAM memory, whereas the quantized vector read from such an address is sent to a unit that limits the modules of its components between 0 and 255 Therefore, the relative output feeds the block that generates the predictor for the next vector to be quantized. This block implements a linear correction of the vector components received at its input. For example, each component is multiplied by a factor alpha, which may be different for each component. Moreover, alpha is a positive integer number greater or equal to zero.

Finally, the starting vector of the scan is sent unmodified to the DRAM and thus in recorded with full precision.

FIGURE 4

This figure shows a sample implementation of a circuit that calculates the mean absolute value of the sum of the differences between the same components of pairs of vectors belonging to the scanned region.

In particular the subtractor calculates the difference among the same components of said vectors. Thereafter, the absolute value thereof is determined, followed by the calculation of the sum of said components for all the vectors that belong to the region under consideration.

By a simple shift operation, the mean value is obtained, which is then fed the quantizer block.

Said block is initialized through a multiplexer with the information stored in one of said ROM tables This multiplexer is driven by a control signal.

Said quantizer outputs a control signal which permits the selection of the most appropriate table, as depicted in Fig. 3.

FIGURES 5 AND 6

Fig. 5 illustrates an embodiment of the scalar quantizer of Fig. 4. While Fig. 6 shows the vectorial quantizer of the prediction error of Fig. 3. Hereinbelow such a vectorial quantizer is described, the description of the scalar quantizer of Fig. 5 being similar.

The ROM, each address of which contains a stored vector, is depicted at the top of both figures. This ROM is initialized by selecting a table using the address generated by the circuit of Fig. 4. H is the number of the ROM addresses The implemented quantizing algorithm will output the quantized vector and the address of the memory cell that contains it, after a number of comparisons equal to the logarithm in base 2 of H.

All the ROM cells corresponding to the even addresses are linked to the MUX (even address) whereas those corresponding to the odd addresses are linked to the MUX (odd address).

The outputs of said two multiplexers respectively feed the NORM COMPUTE blocks that calculate the sum of the squares of the differences among the components of the two vectors present at their respective inputs. Alternatively, said blocks can calculate the sum of the absolute values of the differences among said components.

The outputs of the two blocks that calculate the norm feed a comparator that determines which of the two norms is greater. The resulting signal drives the MUX (address generation) to generate the corresponding even ROM address.

If, the norm between the prediction error vector (see Fig. 3) and the vector read from the ROM at the even address, is lower than the norm between the prediction error vector and the vector read from the odd ROM address, then, for the next iteration of the algorithm the address that drives the MUX (even addresses) multiplied by two, will be used. Otherwise, the address that drives the MUX (odd addresses), multiplied by two, will be used. These addresses are fed to the input of the "address generation" MUX, plus the initial address 2 which is used for the first iteration. Said MUX is controlled by the output of the comparator and by the initialization signal which establishes the use of the value 2 as the initial address value of the ROM address for each search cycle. The MUX output is used to drive the MUX (even address), whereas the other MUX (odd address) is driven by the same output, incremented by 1, thus accessing the odd addresses of the ROM.

For instance, if H = 15, then after four iterations, the architecture of the invention will provide both the quantized and the coded vector. By referring to the example already described in paragraph 4):

```
                                                        H8
                                      H4
                                                        H9
                        H2
                                                        H10
                                      H5
                                                        H11
                  H1
                   \                                    H12
                    \           H6
                     \      /  \   ------>          H13
                      \  H3 /
                                                    H14
                                      H7
                                                    H15
```

<u>1^ STEP</u>

- output address generation MUX    = 2
- control even address MUX      = 2
- control odd address MUX      = 3
- input NORM COMPUTE N1      = H2
- input NORM COMPUTE N2      = H3

Let N2 < N1

- coded vector      = don't care
- quantized vector      = don't care

<u>2^ STEP</u>

- output address generation MUX    = 6
- control even address MUX      = 6
- control odd address MUX      = 7
- input NORM COMPUTE N1      = H6
- input NORM COMPUTE N2      = H7

Let N1 < N2

- coded vector        = don't care
- quantized vector         = don't care

3^ STEP

- output address generation MUX        = 12
- control even address MUX         = 12
- control odd address MUX        = 13
- input NORM COMPUTE N1        = H12
- input NORM COMPUTE N2        = H13

Let N2 < N1

- coded vector        = don't care
- quantized vector         = don't care

4^ STEP

- output address generation MUX        = 13
- control even address MUX         = don't care
- control odd address MUX        = don't care
- input NORM COMPUTE N1        = don't care
- input NORM COMPUTE N2        = don't care
- coded vector        = 13
- quantized vector        = H13

FIGURE 7

Besides providing a general view of the TSVQ decoder, Fig. 7 shows the prediction loop for decoding the pixel vector that follows the current one. The way of defining the two quantizing tables, optimized for luma and chroma compression, may be noted. A multiplexer selects which one must be used, depending on whether the luma or the chroma are being decompressed, and in function of the address that codes the local complexity estimate of the region considered.

The coded prediction error vector read from the DRAM is used as a ROM address containing the codebook; the read vector is then sent to an adder stage which sums it to the vector generated by the SPATIAL PREDICTOR GENERATION block, said block may implement a linear correction on the input vector.

This sum is sent to a unit that limits the modules of its components between 0 and 255.

The output of this unit feeds the block for the generation the predictor for the next vector to be dequantized

Finally the same INTRA vector, the starting vector of the scan, is read from the DRAM memory to initialize the decoding.

The vector so reconstructed is stored in a buffer of 16x16 pels, from which data are read for generating the working window shown in Fig. 11.

On this window operates the median filter described in Fig. 8

FIGURE 8

This figure shows the scheme of a median filter, constituted by three comparators and a multiplexer in its basic structure. The delay lines T permit access to the pels, which subsequently feed the comparators. Said comparators define which is the mean value pixel, by controlling the multiplier that selects the mean value pixel.

As will be evident to a person skilled in the art, besides in MPEG coding/decoding systems, the invention is equally useful to reduce the memory requisite also in different processing systems of video data streams such as for example in SQTV (or IQTV) processors. Moreover, it may also be exploited in coding/decoding systems of data blocks relative to nonvideo information that may be conveniently coded in terms of vectors and compressed through a technique of vectorial quantization by means of an architecture of the invention as that shown in Figures 5 and 6, through a TSVQ algorithm to reduce the memory requisite of the buffers in which the information must be to temporarily stored because of processing needs, in a phase of acquisition and decoding.

In particular, the improved TSVQ compression method and its architecture can be successfully used, according to the invention, in a video processor SQTV (or IQTV) of the type described in said precedent European patent application.

**Claims**

1. A method for reducing the RAM requisite for temporarily storing a stream of digital data blocks in a coding/decoding system of information transferable by blocks by compressing and coding the data by blocks thereof through a tree-search vector quantization, storing tree-search vector quantization compressed and coded data in said RAM and decoding and decompressing in a subsequent reading phase said coded and compressed data, reconstruct said stream of digital data blocks, comprising the subsequent steps of:

   a) fxing a certain scan path of each data block R rows x C columns of said stream to be decomposed into vectors of preestablished dimensions,
   b) coding the first vector V of the scan of a block of data in an unmodified manner,
   c) partitioning in one or more regions the scanning of said RxC block generating,
   d) selecting and calculating a complexity measure for each region as the mean value of the sum of the absolute values of the differences among homologous components of adjacent vectors of said scanning and belonging to said region,
   e) quantizing according to a binary trce-search in a table of quantized values of said measure, by coding its address and using it for controlling a multiplexer selecting a plurality of tables of quantized vectors, sending said address to a multiplexer that thereafter conveys said properly compressed value to said RAM,
   f) generating a predictor vector of the current one to be quantized, as a replica of the last decoded vector according to said scanning and calculating a prediction error vector,
   g) quantizing according to a binary tree-search in a read only table of quantized vectors said prediction error vector, said table being selected among said plurality by the address of said quantized measure, coding the address of said table and sending it to a multiplexer that subsequently conveys said compressed value to said RAM,
   h) adding the components of the vector read from the selected table of quantized vectors to said vector replica of the vector previously decoded, generating a prediction vector for the next vector to be coded, according to the scanning path and the selected region,
   i) repeating steps d) to h), following said scanning path for all the regions that make up the RxC block and for all the scanning vectors of each input data block,

   **characterized by** further comprising the following subsequent steps;

   i) premultiplying a read-only table using the quantized complexity measures, relative to the centroids of the tree-like scheme used for said search, producing as many precalculated tables for quantizing the prediction error of a physical parameter of said digital data block;
   ii) quantizing the prediction error using one of said precalculated tables selected by an address generated by estimating and quantizing a complexity measure of each one of said regions in which the RxC block is divided.

2. The method according to claim 1, **characterized** is that said block of input data is a RxC block of pixels of a video picture and said physical parameters are the luminance and the chrominance.

3. An MPEG-2 video decoder, intcrfacing with a control bus and a memory data bus though which video data are written on and read off respective RAM buffers, external to the "core" of the video decoder, comprising a fust first-in-first-out buffer of data acquisition and writing of compressed data in a respective first buffer of video bit of a memory, a picture starting code detecting circuit, synchronized by a control circuit , a bi-directional buffer for on-screen-data-display , a variable length decoder of the compressed input data stream an AVEG-2 decompression pipeline of the data decoded by said variable length decoder, comprising a run length decoding stage, an inverse quantizer circuit, an inverse discrete cosine transform processor, a predictor value generating circuit, a conversion circuit of a current B-Picture, upstream of a display unit, a coding and recompressing circuit , functioning according to a tree-search vector quantization algorithm, recompressing decompressed I and P pictures and coding the respective data to be stored in respective buffers of said memory; a decoding and decompressing circuit of the stored data read from the respective buffers of said memory generating a stream of decoded and decompressed data relative to said I and P pictures, means of motion compensation of B-pictures and of conversion , said recompressing and coding circuit comprising a buffer for the acquisition of blocks of input data, decomposing the block of input data in vectors of predefined dimensions and in an initial vector , a differentiating stage receiving through a first input the decomposition vectors of said block of input data and through a second input prediction vectors and outputting prediction error vectors , a vector quantizing and coding circuit circuit receiving through an input said error prediction vectors output by said differentiating stage and using at least two distinct tables of quantized vectors respectively optimized for luminance and chrominance compression, selected automatically by a first multiplexer, a limiting circuit of the components, a generator circuit of a predictor vector receiving through a first input a quantized vector, whose components are limited by said limiting circuit , and through a second input the first decomposition vector of an R*C block scan present at the output of said input buffer and generating said prediction vector that is sent to the second input of said differentiating stage, **characterised in that** it comprises further:

two distinct sets of tables of quantized prediction errors, each obtained by multiplying the relative table of quantized prediction errors by each one of a plurality of predefined quantized measures of complexity;

a stage measuring the complexity or gain of each region and quantizing said measure through a binary tree-search scheme producing an address of a respective table containing a quantized vector to store through a second multiplexer , in a respective buffer of external memory with the address of the quantized value of the local complexity measure together with the first scanning vector and driving the selection of said precalculated tables through said first multiplexer ;

an adder stage receiving through a first input the prediction vector produced by said generator circuit of a predictor vector, and through a second input the vector output by said first multiplexer , which is fed by the plurality of vectors selectively read from said tables and having an output coupled to the input of said limiting circuit of the components ;

the output of said limiting circuit feeding through a buffer a pixel stream, said MPEG2 decompression pipeline and said converting block.

**4.** The decoder according to claim 3, **characterized in that** each of said recompression and coding circuit , and said decoding and decompression circuit comprises multiplexer means enabling and disabling said circuits for a dynamic management of the compression rate of the digital data stream to be stored in said external memory.

**Patentansprüche**

**1.** Verfahren zum Reduzieren der RAM-Voraussetzungen zum vorübergehenden Speichern eines Stroms digitaler Datenblöcke in einem Kodierungs-/Dekodierungssystem für Informationen, die durch Blöcke übertragbar sind, durch blockweises Komprimieren und Kodieren der Daten durch eine Baumsuche-Vektorquantisierung, Speichern der durch Baumsuche-Vektorquantisierung komprimierten und kodierten Daten im RAM und Dekodieren und Dekomprimieren in einer nachfolgenden Lesephase der kodierten und komprimierten Daten, wobei der Strom digitaler Datenblöcke rekonstruiert wird, wobei das Verfahren die nachfolgenden Schritte aufweist:

a) Festlegen eines bestimmten Abtastweges jedes Datenblocks aus R Reihen x C Spalten des Stroms, der in Vektoren vorbestimmter Dimensionen zerlegt werden soll,
b) Kodieren des ersten Vektors V der Abtastung eines Datenblocks in einer nichtmodifizierten Weise,
c) Partitionieren in einen oder mehrere Bereiche der Abtastung der RxC-Blockerzeugung,
d) Auswählen und Berechnen einer Komplexitätsmaßzahl für jeden Bereich als einen Mittelwert der Summe der Absolutwerte der Differenzen zwischen homologen Komponenten benachbarter Vektoren der Abtastung, die zu dem Bereich gehören,
e) Quantisieren gemäß einer binären Baumsuche in einer Tabelle quantisierter Werte der Maßzahl, indem ihre Adresse kodiert wird und sie verwendet wird, um einen Multiplexer zu steuern, der mehrere Tabellen quantisierter Vektoren auswählt, Senden der Adresse an einen Multiplexer, der danach den geeigneten komprimierten Wert zum RAM überträgt,
f) Erzeugen eines Prädikatorvektors des gegenwärtigen, der quantisiert werden soll, als Kopie des zuletzt dekodierten Vektors gemäß der Abtastung und Berechnen eines Prädiktionsfehlervektors,

g) Quantisieren gemäß einer binären Baumsuche in einer Festwerttabelle quantisierter Vektoren des Prädiktionsfehlervektors, wobei die Tabelle aus den mehreren durch die Adresse der quantisierten Maßzahl ausgewählt wird, Kodieren der Adresse der Tabelle und Senden derselben an einen Multiplexer, der nachfolgend den komprimierten Wert zum RAM überträgt,

h) Addieren der Komponenten der Vektors, der aus der ausgewählten Tabelle quantisierter Vektoren gelesen wird, zu der Vektorkopie des vorher dekodierten Vektors, wobei ein Prädiktionsvektor für den nächsten Vektor, der kodiert werden soll, gemäß dem Abtastweg und dem ausgewählten Bereich erzeugt wird,

i) Wiederholgen der Schritte d) bis h), wobei dem Abtastweg für alle Bereiche gefolgt wird, um den RxC-Block zu erzeugen, und für alle Abtastungsvektoren jedes Eingangsdatenblocks,

**dadurch gekennzeichnet, daß** es ferner die folgenden nachfolgenden Schritte aufweist:

i) Vor-Multiplizieren einer Festwerttabelle unter Verwendung der quantisierten Komplexitätsmaßzahlen, relativ zu den Schwerpunkten des Baumschemas, das für die Suche verwendet wird, wobei so viele vorberechnete Tabellen zur Quantisierung des Prädiktionsfehlers für einen physikalischen Parameter des digitalen Datenblocks erzeugt werden;

ii) Quantisierung des Prädiktionsfehlers unter Verwendung einer der vorberechneten Tabellen, die durch eine Adresse ausgewählt wird, die durch Berechnen und Quantisieren einer Komplexitätsmaßzahl jedes der Bereiche erzeugt wird, in die der RxC-Block unterteilt ist.

2. Verfahren nach Anspruch 1, **dadurch gekennzeichnet, daß** der Block der Eingangsdaten ein RxC-Block der Pixel eines Videobildes ist und die physikalischen Parameter die Luminanz und die Chrominanz sind.

3. MPEG-2-Video-Dckodierer, der eine Schnittstelle mit einem Steuerbus und einem Speicherdatenbus bildet, durch den Videodaten in jeweilige RAM Puffer geschrieben und aus ihnen gelesen werden, die außerhalb des "Kerns" des Videodekodierers angeordnet sind, der aufweist: einen ersten Silo-Puffer zur Datenerfassung und Schreiben der komprimierten Daten in einen jeweiligen ersten Videobit-Puffer eines Speichers, eine Bildstartcode- Detektionsschaltung, die durch eine Steuerschaltung synchronisiert wird, einen bidirektionalen Puffer für eine Bildschirm-Einblendungsdatenanzeige, einen Dekodierer mit variabler Länge für den komprimierten Eingangsdatenstrom BIT Strom, eine MPEG-2-Dekompressions-Pipeline der Daten, die durch den Dekodierer mit variabler Länge dekodiert werden, der eine Lauflängen-Dekodierungsstufe aufweist, eine inverse Quantisierungsschaltung, einen Prozessor zur inversen diskreten Kosinustransformation, eine Prädikatorwert-Erzeugungsschaltung, eine Umwandlungsschaltung eines gegenwärtigen B-Bildes, stromaufwärts einer Anzeigeeinheit, eine Dekodierungs- und Dkkompressionsschaltung, die gemäß einem Baumsuche-Vektorquantisierungsalgorithmus arbeitet, die dekomprimierte I- und P-Bilder neu komprimiert und die jeweiligen Daten kodiert, die in jeweiligen Puffern des Speichers gespeichert werden sollen; eine Dekodierungs- und Dekompressionsschaltung der gespeicherten Daten, die aus den jeweiligen Puffern des Speichers gelesen werden, die einen Strom dekodierter und dekomprimierter Daten relativ zu den I- und P-Bildern erzeugt, eine Einrichtung zur Bewegungskompensation der B- Bilder und zur Umwandlung, wobei die Neukompressions- und Kodierungsschaltung einen Puffer für die ERfassung von Blöcken von Eingangsdaten aufweist, wobei er den Block der Eingangsdaten in Vektoren vordefinierter Dimensionen und in einen Anfangsvektor zerlegt, wobei eine Differenzierungsstufe durch einen ersten Eingang die Zerlegungsvektoren des Block der Eingangsdaten und durch einen zweiten Eingang Prädiktionsvektoren empfängt und Prädiktionsfehlervektoren ausgibt, wobei eine Vektorquantisierungs- und Kodierungsschaltung durch einen Eingang die Prädiktionsfehlervektoren empfängt, die durch die Differenzierungsstufe ausgegeben werden und mindestens zwei unterschiedliche Tabellen quantisierter Vektoren verwendet, die jeweils zur Luminanz- und Chrominanz-Kompression optimiert sind, die automatisch durch einen ersten Multiplexer ausgewählt werden, eine Begrenzungsschaltung der Komponenten, eine Generatorschaltung eines Prädikatorvektors, die durch einen ersten Eingang einen quantisierter Vektor, dessen Komponenten durch die Begrenzungsschaltung begrenzt werden, und durch einen zweiten Eingang den ersten Zerlegungsvektor eines R*C Blockabtastungsvektors empfängt, der am Ausgang des Eingangspuffers vorhanden ist, und den Prädiktionsvektor erzeugt, der an den zweiten Eingang der Differenzierungsstufe geschickt wird, **dadurch gekennzeichnet, daß** er ferner aufweist:

zwei unterschiedliche Sätze von Tabellen quantisierter Prädiktionsfehler, die jeweils erhalten werden, indem die relative Tabelle quantisierter Prädiktionsfehler mit jeder mehrerer vordefinierter quantisierter Maßzahlen der Komplexität multipliziert wird;
eine Stufe, die die Komplexität oder Verstärkung jedes Bereiches mißt und diese Maßzahl durch ein binäres Baumsuchschema quantisiert, wobei wie Adresse einer jeweiligen Tabelle erzeugt wird, die einen quantisierten Vektor enthält, der durch einen zweiten Multiplexer in einem jeweiligen Puffer eines äußeren Speichers mit der Adresse des quantisierten Wcrts der lokalen Komplexitätsmaßzahl zusammen mit dem ersten Abtastungsvektor gespeichert werden soll, und die die Auswahl der vorberechneten Tabellen durch den ersten Multiplexer treibt; eine Addiererstufe, die durch einen ersten Eingang den Prädiktionsvoktor, der durch die genannte Generatorschaltung eines Prädikatorvektors erzeugt wird, und durch einen zweiten Eingang den Vektor empfängt, der durch den ersten Multiplexer ausgegeben wird, mit den mehreren Vektoren gespeist wird, die selektiv aus den Tabellen gelesen werden, und die einen Ausgang aufweist, der mit dem Eingang der Begrenzungsschaltung der Komponenten gekoppelt ist,

wobei der Ausgang der Begrenzungsschaltung durch einen Puffer die MPEG2 Dekompressionspipeline und den Umwandlungsblock mit einem Pixelstrom versorgt.

**4.** Dekodierer nach Anspruch 3, **dadurch gekennzeichnet, daß** jede der Neukompressions- und Kodierungsschaltung und der Dekodierungs- und Dekompressionsschaltung einen Multiplexereinrichtung aufweist, die die Schaltungen für eine Dynamikverwaltung der Kompressionsrate des digitalen Datenstroms sperrt und freigibt, der im äußeren Speicher gespeichert werden soll.

**Revendications**

**1.** Procédé de réduction de la quantité de RAM requise pour mémoriser temporairement un flux de blocs de données numériques dans un système de codage/décodage d'informations transférables par blocs en comprimant et codant les données par blocs par l'intermédiaire d'une quantification à vecteur de recherche arborescente, en mémorisant des données à vecteur de recherche arborescente codées et comprimées dans la RAM et en codant et en décomprimant dans une phase de lecture suivante les données codées et comprimées, pour reconstruire le flux de blocs de données numériques, comprenant les étapes successives suivantes :

a) fixer un certain trajet de balayage pour chaque bloc de données de R rangées et C colonnes du flux à décomposer en vecteurs de dimensions prédéterminés,
b) coder le premier vecteur Vdu balayage d'un bloc de données de façon non modifiée,
c) partitionner en une plusieurs régions le balayage d'un génération du bloc RxC,
d) sélectionner et calculer une mesure de complexité pour chaque région en tant que valeur moyenne de la somme des valeurs absolues des différences entre composantes homologues des vecteurs adjacents dudit balayage et appartenant à ladite région,
e) quantifier selon une recherche arborescente binaire dans une table de valeurs quantifiées de la mesure, en codant son adresse et en l'utilisant pour commander un multiplexeur sélectionnant une pluralité de tables de valeurs quantifiées, en envoyant l'adresse à un multiplexeur qui transporte ensuite la valeur convenablement comprimée à la RAM,
f) produire un vecteur prédicteur du vecteur courant à quantifier, en tant que réplique du dernier vecteur décodé selon le balayage, et calculer un vecteur d'erreur de prédiction,
g) quantifier selon une recherche arborescente binaire dans une table à lecture seulement de vecteurs quantifiés le vecteur d'erreur de prédiction, la table étant choisie parmi la pluralité par l'adresse de la mesure quantifiée, coder l'adresse de la table et l'envoyer à un multiplexeur qui transmet ensuite la valeur comprimée à la RAM,
h) ajouter les composantes du vecteur lu à partir de la table choisie de vecteurs quantifiés vers la reproduction vectorielle du vecteur précédemment décodé, produire un vecteur prédiction pour la vecteur suivant à coder, selon le trajet de balayage de la région sélectionnée,
i) répéter les étapes d) à h), en suivant le trajet de balayage pour toutes les régions qui constituent le bloc RxC et pour tous les vecteurs de balayage de chaque bloc de données d'entrée,

**caractérisé en ce qu'**il comprend en outre les étapes successives suivantes :

i) premultipller une table à lecture seulement en utilisant les mesures de complexité quantifiées par rapport aux centroldes du processus arborescent utilisé pour la recherche, en produisant autant de tables précalculées pour quantifier l'erreur de prédiction d'un paramètre physique, du bloc de données numériques,
ii) quantifier l'erreur de prédiction en utilisant l'une des tables précalculées sélectionnées par une adresse produite en estimant et en quantifiant une mesure de complexité de chacune desdites régions en lesquelles le bloc RxC est divisé.

**2.** Procédé selon la revendication 1, **caractérisé en ce que** le bloc de données d'entrée est un bloc à RxC pixels d'une image vidéo et les paramètres physiques sont la luminance, et la chrominance.

**3.** Décodeur vidéo MPEG-2, servant d'interface avec un bus de commande, et un bus de données mémoire, par lequel les données vidéo sont écrites et lues à partir de tampons RAM respectifs, externe au "noyau" du décodeur vidéo, comprenant un tampon du type premier entré - premier sorti, d'acquisition de données et d'écriture des données comprimées dans un premier tampon respectif d'un tampon de bit vidéo, d'une mémoire (un circuit de détection de code de débit d'image, synchronisé par un circuit de commande, (CONTROLER), un tampon bidirectionnel, pour un affichage de données sur écran, un décodeur à longueur variable, du flux d'entrée de données comprimées, et un pipeline de décompression MPEG-2, des données décodées par le décodeur à longueur variable comprenant un étage de décodage de longueur de code, un circuit quantificateur inverse, un processeur de transformée cosinus discrète inverse, un circuit de génération de valeur de prédicteur, un circuit de conversion, d'une image B courante, en amont d'un dispositif d'affichage, un circuit de codage et de recompression, fonctionnant selon un algorithme de quantification à vecteur de recherche arborescente, recomprimant des images I et P décomprimées et codant les données respectives à mémoriser dans des tampons respectifs de la mémoire ; un circuit de décodage et de décompression, des données mémorisées et lues à partir des tampons respectifs de la mémoire produisant un flux de données décodées et décomprimées vers des images I et P, des moyens de compensation de mouvement des images B et de conversion, le circuit de recompression et de codage, comprenant un tampon, pour l'acquisition de blocs de données d'entrée, en décomposant le bloc de données d'entrée en vecteurs de dimensions prédéfinies et en un vecteur initial, un étage de différentiation recevant par une première entrée des vecteurs de décomposition du bloc de données d'entrée et, par une seconde entrée, des vecteurs prédiction et fournissant des vecteurs d'erreur de prédiction, un circuit de quantification et de codage de vecteur, recevant par l'intertnédiaire d'une entrée les vecteurs de prédiction d'erreur fournis par l'étage de différentiation et utilisant au moins deux tables distinctes de vecteurs quantifiés, respectivement optimisées pour la compression de la luminance et de la chrominance, sélectionnées automatiquement par un premier multiplexeur, un circuit limitateur de composantes, un circuit générateur de vecteur prédicteur, recevant par une première entrée un vecteur quantifié dont les composantes sont limitées par le circuit de limitation, et par une seconde entrée le premier vecteur de décomposition d'un balayage par bloc RxC, présent à la sortie du tampon d'entrée, et produisant le vecteur de prédiction qui est envoyé à la seconde entrée de l'étage de différentiation, **caractérisé en ce qu'**il comprend en outre :

deux ensembles distincts de tables, d'erreurs de prédiction quantifiées, chacun étant obtenu en multipliant la table relative d'erreurs de prédiction quantifiées par chacune d'une pluralité de mesures quantifiées prédéterminés de complexité ;

un étage, mesurant la complexité ou le gain de chaque région et quantifiant la mesure par l'intermédiaire d'un processus de recherche arborescente binaire produisant une adresse, d'une table respective contenant un vecteur quantifié, pour mémoriser par l'intermédiaire d'un second multiplexeur, dans un tampon respectif d'une mémoire externe avec l'adresse de la valeur quantifiée de la mesure de complexité locale, en même temps que le premier vecteur de balayage, et pilotant la sélection des tables précalculées par l'intermédiaire du premier multiplexeur,

un étage additionneur recevant par une première entrée le vecteur de prédiction produit par la génération de prédicteur spatiale, et par une seconde entrée la sortie de vecteur, fournie par le premier multiplexeur qui reçoit la pluralité de vecteurs sélectivement lus à partir des tables, et ayant une sortie couplée à l'entrée du circuit de limitation des composantes,

la sortie du circuit de limitation, fournissant par l'intermédiaire d'un tampon un flux de pixels, le pipeline de décompression MPEG2, et le bloc de conversion.

**4.** Décodeur selon la revendication 3, **caractérisé en ce que** le circuit de recompression et de codage, et le circuit de décodage et de décompression, comprennent des moyens multiplexeurs validant et invalidant les circuits pour une gestion dynamique du taux de compression du flux de données numériques à mémoriser dans la mémoire externe.

FIG. 1

FIG. 2

FIG. 3

FIG. 4

FIG. 5

FIG. 6

EP 0 920 204 B1

INTRA VECTOR
(from DRAM)

8x4

SPATIAL PREDICTOR
GENERATION

8x4

16x16 pels
BUFFER

P

CODEBOOK 3
CODEBOOK 2
LUMINANCE CODEBOOK 1

q

Y

VECTORS
ADDRESS
(from DRAM)

CROMINANCE CODEBOOK 1

t

U&V

CODEBOOK 2
CODEBOOK 3
CODEBOOK C

MUX

P BITS

9x4

LIMIT [0..255]

8x4

MEDIAN
FILTER

8

TO MOTION COMPENSATION
AND DISPLAY UNIT

LUMA/CROMA

- F BITS

ADDRESS
(from DRAM)

FIG. 7

FIG. 8

16 x 8    vector scan with
- R = 8
- C = 16
- J = 2
- K = 2

FIG. 9

FIG. 10

vertical median filter correction
on top (bottom) field

FIG. 11